Europäisches Patentamt

European Patent Office

Office européen des brevets

(19)

(11) Veröffentlichungsnummer : **0 097 369**
**B1**

(12) **EUROPÄISCHE PATENTSCHRIFT**

(45) Veröffentlichungstag der Patentschrift :
03.12.86

(21) Anmeldenummer : 83106066.0

(22) Anmeldetag : 21.06.83

(51) Int. Cl.⁴ : **F 16 H 39/46**, B 60 K 41/26,
G 05 G 11/00

(54) Schaltvorrichtung für ein Getriebe.

(30) Priorität : 21.06.82 US 390148

(43) Veröffentlichungstag der Anmeldung :
04.01.84 Patentblatt 84/01

(45) Bekanntmachung des Hinweises auf die Patenterteilung : 03.12.86 Patentblatt 86/49

(84) Benannte Vertragsstaaten :
DE FR GB SE

(56) Entgegenhaltungen :
DE-B- 1 550 684
GB-A- 1 230 969
GB-A- 1 338 992
US-A- 3 354 981
US-A- 4 075 841

(73) Patentinhaber : **DEERE & COMPANY**
**1 John Deere Road**
**Moline Illinois 61265 (US)**

(72) Erfinder : **Wanie, Lee Joseph**
**212, West Lake Street**
**Horicon Wisconsin 53032 (US)**

(74) Vertreter : **Sartorius, Peter et al**
**DEERE & COMPANY European Office, Patent Depart-**
**ment Postfach 503 Steubenstrasse 36-42**
**D-6800 Mannheim 1 (DE)**

## Beschreibung

Die Erfindung bezieht sich auf eine Schaltvorrichtung für ein Getriebe, insbesondere für ein hydrostatisches Getriebe mit einem ersten Schalthebel zur Betätigung einer Bremse und mit einer Neutral-Einstellvorrichtung, die bei Betätigung des ersten Schalthebels einen zweiten Schalthebel in eine Neutralstellung verstellt, der mit einem Steuergestänge zur Schaltung des Getriebes verbunden ist, wobei die Bewegungsrichtung der Neutral-Einstellvorrichtung quer zur Längsseite des Steuergestänges verläuft und die Neutral-Einstellvorrichtung beiderseits einer Schwenkachse des Steuergestänges ein erstes und ein zweites in die Bewegungsrichtung der Neutral-Einstellvorrichtung verstellbares Anschlagteil aufweist, wobei die Neutral-Einstellvorrichtung zwischen einer ersten Stellung, in der das Steuergestänge zwischen Fahrtstellung und Rückwärtsfahrtstellung frei verschwenkbar ist, und einer zweiten Stellung verstellbar ist, in der das Steuergestänge in eine Neutralstellung gebracht bzw. in dieser gehalten wird und in der beide Anschlagteile gegen das Steuergestänge anliegen können, wobei die Neutraleinstellvorrichtung einenends an ein Bremspedal angeschlossen ist.

Es ist bereits eine Schaltvorrichtung für ein hydrostatisches Getriebe bekannt, die aus einem Handschalthebel besteht, der über ein Gestänge mit dem hydrostatischen Getriebe verbunden ist, so daß das Getriebe entweder auf Neutralstellung, auf Vorwärtsfahrt oder auf Rückwärtsfahrt eingestellt werden kann. Der Handschalthebel ist über eine Nockensteuerung mit dem Pedal zur Betätigung der Bremse verbunden. Eine derartige Schaltvorrichtung ist sehr aufwendig und teuer, da eine besondere Nockenführung erforderlich ist, um über diese eine entsprechende Verstellung des Handschalthebels bzw. des Getriebes in eine Neutralstellung zu erreichen, wenn das Bremspedal betätigt wird. Außerdem erfordert eine derartige Nockenführung eine ganz präzise Ausbildung der einzelnen Schaltvorrichtungsteile und eine öftere Nachjustierung (US-A-3 511 105).

Ferner ist eine Schaltvorrichtung für ein Getriebe der eingangs aufgeführten Art bekannt, bei der das Bremspedal über einen Winkelhebel mit einer Neutral-Einstellvorrichtung gelenkig verbunden ist. Der Hebelarm der Neutral-Einstellvorrichtung verläuft parallel zum Gestänge des Bremspedales und des Fahrerhebels. Der Fahrerhebel ist mit seinem Gestänge an einen Hebel gelenkig angeschlossen, der mit zwei Anschlägen ausgerüstet ist, die gegen den Hebelarm der Neutral-Einstellvorrichtung zur Anlage kommen können. Um eine Feineinstellung des Hebelarmes der Neutral-Einstellvorrichtung zu gewährleisten, weist dieser eine Einstellschraube auf. Der mit dem Fahrerhebel verbundene Hebelarm ist jedoch gegenüber dem Hebelarm der Neutral-Einstellvorrichtung nicht einstellbar. Darüber hinaus läßt sich ein derartiger Hebel lediglich aus einer bestimmten Schräglagestellung in eine Neutralstellung verstellen (DE-B-1 550 684).

Demgegenüber liegt der Erfindung die Aufgabe zugrunde, die Schaltvorrichtung zur Verstellung des Getriebes und der Bremse derart auszubilden und anzuordnen, daß bei geringem baulichen Aufwand eine Neutralstellung des Getriebes bei verschiedenen Schaltpositionen einstellbar ist, wobei das Steuergestänge der Schaltvorrichtung auf einfache Weise gelagert ist.

Diese Aufgabe wird durch die im Anspruch 1 aufgeführten Merkmale gelöst. Durch die vorteilhafte Verwendung der Neutral-Einstellvorrichtung in Verbindung mit einem Steuergestänge, das quer zur Bewegungsrichtung der Neutral-Einstellvorrichtung angeordnet ist, läßt sich auf einfache Weise und ohne großen baulichen Aufwand eine Neutraleinstellung am Getriebe durchführen, wenn das Bremspedal ein wenig betätigt wird, so daß bei einer weiteren Verstellung des Bremspedals zum Bremsen des Fahrzeuges das Getriebe nicht unnötig beansprucht wird bzw. seine Antriebsleitung an das Fahrzeug, beispielsweise an einen Gartenschlepper, abgibt. Durch die vorteilhafte Lagerung des Steuergestänges im Bereich des Endes der Neutral-Einstellvorrichtung läßt sich dieses auf einfache Weise verstellen und somit eine Rückstellung des zweiten Schalthebels aus verschiedenen Positionen erreichen. Die Lagerung des Steuergestänges in den Längsschlitzen gewährleistet eine einwandfreie Führung des Steuergestänges und somit eine exakte Rückstellung des Handschalthebels, wenn das Bremspedal betätigt wird.

Sollten beim Einbau der Schaltvorrichtung Herstellungstoleranzen ausgeglichen werden, so ist es gemäß den Merkmalen des Anspruches 2 vorteilhaft, daß das Steuergestänge gegenüber dem Handschalthebel einstellbar ist. Die Einstellung des Steuergestänges gegenüber dem Handschalthebel wird dadurch erleichtert, daß die Bewegungsrichtung der Neutral-Einstellvorrichtung quer zur Längsseite des Steuergestänges verläuft. Hierdurch lassen sich die beiden Schenkel mit den zugehörigen Anschlägen gleichmäßig gegenüber dem Steuergestänge verstellen, so daß beide Schenkel in der Neutralstellung des Steuergestänges ständig den gleichen Abstand aufweisen. Darüber hinaus ist auch eine weitere Einstellung des Steuergestänges gegenüber den Anschlägen möglich, so daß der Handschalthebel so eingestellt werden kann, daß er stets seine Neutralstellung erreicht, bevor der Bremshebel in eine Stellung verschwenkt worden ist, in der die Bremse anspricht. Eine weitere Justierung läßt sich auch dadurch vornehmen, daß ein Schenkel der Gabel mit einer einstellbaren Schraube versehen ist, so daß hier eine genaue Justierung der Schaltvorrichtung vorgenommen werden kann, um Fertigungstoleranzen auszugleichen. Normalerweise ist jedoch beim Einbau nur eine einmalige Justierung der Schaltvorrichtung notwendig, da das Anschlagteil keinem größeren Verschleiß unterliegt, wie das beispielsweise bei über Nocken beeinflußbaren Schaltvorrichtungen der Fall ist.

Durch die Spielverbindung gemäß den Merkmalen des Anspruches 3 wird gewährleistet, daß das Getriebe über das Bremspedal und das Gestänge in eine Neutralstellung verstellbar ist, bevor das Bremsgestänge betätigt wird. Durch die parallel verlaufende Ausrichtung des Bremsgestänges, des Handhebels sowie des Gestänges der Neutral-Einstellvorrichtung erhält man eine sehr platzsparende Anordnung der gesamten Schaltvorrichtung. Durch die Spielverbindung wird sichergestellt, daß das Bremspedal auch dann noch verstellbar ist, wenn die Bremse vollständig zum Einsatz gekommen ist, um beispielsweise eine weitere Schaltfunktion mittels des Bremspedals auszulösen, beispielsweise einen Parkverriegelungsmechanismus. Da bei dieser Verstellung auch das Steuergestänge über die Gabel beiderseits der Schwenkachse des Steuergestänges beaufschlagt wird, bleibt das Steuergestänge in seiner Neutralstellung.

Die letzteren und weiteren Merkmale sind Gegenstand der Unteransprüche.

In der Zeichnung ist ein Ausführungsbeispiel einer Schaltvorrichtung für einen Gartenschlepper nach der Erfindung schematisch dargestellt. Es zeigt :

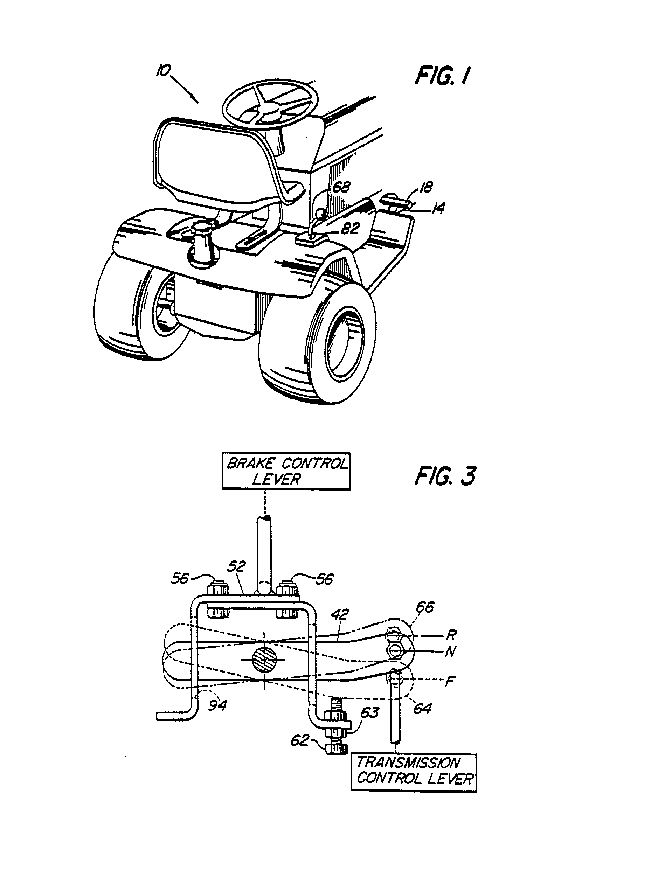

Figur 1   eine perspektivische Darstellung des hinteren Teils eines Gartenschleppers,

Figur 2   die erfindungsgemäße Schaltvorrichtung in perspektivischer Darstellung,

Figur 3   eine Draufsicht eines Teils der Schaltvorrichtung zur Betätigung der Bremse und des Getriebes.

In der Zeichnung ist mit 10 der hintere Teil eines Gartenschleppers bezeichnet, der einen Hauptrahmen 12 mit zwei mit Abstand zueinander angeordneten sich in Längsrichtung erstreckenden Rahmenteilen 14 aufweist, wobei lediglich der rechte Rahmenteil 14 dargestellt ist. Auf der rechten Seite des Schleppers 10 befindet sich ein Bremspedal 18, das an einer quer verlaufenden Welle 20 angeschlossen ist, die in dem kastenförmigen Rahmenteil 14 drehbar gelagert ist.

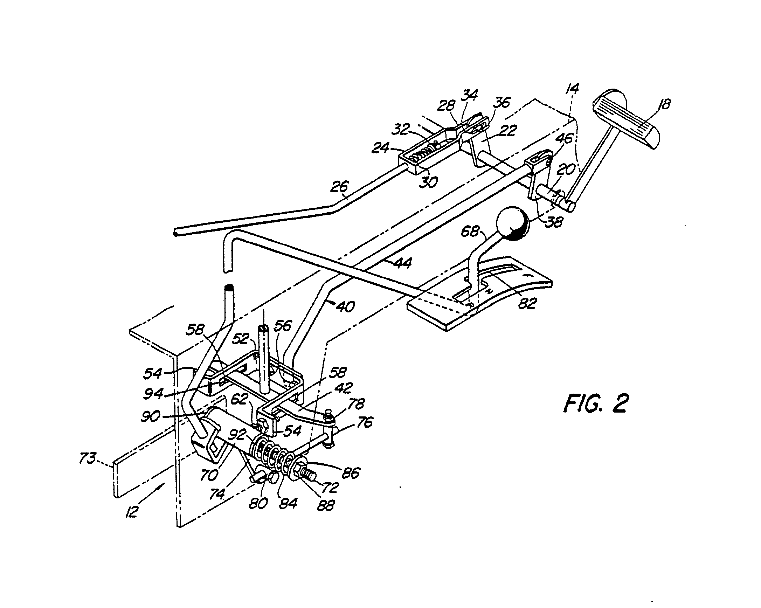

Auf der linken Seite des Rahmenteils 14 befindet sich an der Welle 20 ein aufrecht stehender Hebelarm 22, an dessen äußerem Ende eine Gabel 28 angeschlossen ist. Die Gabel 28 dient zur Aufnahme eines Bremsgestänges 26, das über das Bremspedal 18 in Längsrichtung hin- und herverstellt werden kann. Das vordere Ende des Bremsgestänges 26 ist in einer Bohrung der Gabel 28 aufgenommen, wobei der vordere Teil des Bremsgestänges 26 sich zwischen parallel verlaufenden Schenkeln 24 der Gabel 28 erstreckt und eine Feder 30 trägt, die einenends gegen den quer verlaufenden Steg der Gabel 28, anderenends gegen einen Sicherungsring 32 anliegt, der am Ende des Bremsgestänges 26 aufgesetzt ist. Das obere äußere Ende des Hebelarms 22 erstreckt sich zwischen die beiden Enden der Schenkel 24 und ist mittels eines Bolzens 36 gesichert, der hierzu in in den Schenkeln 24 vorgesehenen Längsschlitzen aufgenommen ist. Der Bolzen 36 weist endseitig Sicherungssplinte auf, die verhindern, daß der Bolzen 36 aus den Längsschlitzen 34 herausgleitet. Der Längsschlitz 34 weist eine derartige Länge auf, daß das Bremspedal 18 im Uhrzeigerdrehsinn geschwenkt werden kann, und zwar von einer in Fig. 2 dargestellten Bremslösungsstelle in eine Zwischenstellung, ohne daß durch diese Bewegung das Bremsgestänge 26 verstellt wird. Wird das Bremspedal 18 über die Zwischenstellung hinaus verstellt, kann über das Bremsgestänge 26 die Bremse für den Bremsvorgang beeinflußt werden.

Ein zweiter aufrecht stehender Hebelarm 38 ist ebenfalls an die Welle 20 angeschlossen, und zwar an einer Stelle, die links vom Rahmenteil 14 liegt. An den Hebelarm 38 ist eine Neutral-Einstellvorrichtung 40 angeschlossen, zu der ein Gestänge 44 gehört, das einenends an den Hebelarm 38 und anderenends an ein Steuergestänge 42 einer hydrostatischen Antriebsvorrichtung angeschlossen ist, so daß diese über das Gestänge 44 in eine mittlere Neutralstellung verstellt werden kann, um zumindest eine teilweise Neutralstellung des Getriebes in Abhängigkeit von der Stellbewegung des Bremspedals 18 zu erreichen, wenn dieses von der Bremslösungsstelle in seine Mittelstellung verstellt wird.

Das Gestänge 44 der Neutral-Einstellvorrichtung 40 weist einenends eine Gabel 52 auf und ist anderenends über einen Gelenkbolzen 46 an das äußere Ende des Hebelarms 38 angeschlossen. Die an das hintere Ende des Gestänges 44 angeschlossene U-förmige Gabel 52 weist an ihrem Quersteg zwei mit Abstand zueinander verlaufende Schenkel 54 auf, die an ihren freien Enden um 90° abgebogen sind. Die beiden Schenkel 54 sind über zwei sich überlappende, den Quersteg bildende Stege, durch die sich zwei Schraubenbolzen 56 erstrecken, miteinander fest verbunden. Die parallel zueinander verlaufenden und gegenüberliegenden Schenkel 54 weisen ebenfalls gegenüberliegende Längsschlitze 58 auf, in denen das Steuergestänge 42 verschiebbar aufgenommen ist. Das Gestänge 44 ist an seinem einen Ende um 90° abgewinkelt und mit dem abgewinkelten Teil, der vertikal verläuft, an den Steg der Gabel 52 fest angeschlossen. Das Steuergestänge 42 kann in den Längsschlitzen 58 der Gabel 52 um eine vertikal verlaufende Achse geschwenkt werden. Wie insbesondere aus Fig. 2 und 3 hervorgeht, trägt das Steuergestänge 42 das hintere Ende der Neutral-Einstellvorrichtung 40. Die entsprechenden hinteren Enden der Schenkel 54 weisen je eine Bohrung auf, wobei in einer Bohrung eine als Schraubenbolzen 62 mit Muttern 63 ausgebildete Anschlagvorrichtung aufgenommen ist. Die Muttern 63 liegen beiderseits des Gabelendes an und dienen zur Sicherung des Schraubenbolzens 62. Nimmt das Bremspedal 18 seine in Fig. 2 dargestellte Bremslösungsstelle ein, so kann das Steuergestänge 42 zwischen einer Neutralstellung N, einer Stellung für Vorwärtsfahrt F und einer Stellung für Rückwärtsfahrt R verschwenkt werden, ohne daß dabei die Neutral-Einstellvorrichtung 40 in irgendeiner Weise beeinflußt wird. In Fig. 3 sind die Extremstellungen R und F durch die gestrichelten Linien 64 und 66 angedeutet.

Um das Steuergestänge 42 in eine der gewünschten Stellungen R, N und F zu verschwenken, ist ein Handschalthebel 68 im Bereich des Fahrersitzes des Gartenschleppers 10 vorgesehen, der gemäß Fig. 2 über ein Gestänge mit einer Buchse 70 verbunden ist, die drehbar auf einer quer verlaufenden Gewindestange 72 lagert, die sich mit ihrem linken Ende durch den Rahmenteil 14 erstreckt und von einer flexiblen Lasche 73 aufgenommen ist. An das rechte Ende der Buchse 70 ist ein sich nach unten und vorne erstreckender Hebel 74 angeschlossen, an dem ein eine Bohrung aufweisender Schwenkzapfen 80 angeordnet ist, in dessen Bohrung ein Gestänge 76 mittels einer Schraube gesichert ist. Das vordere freie Ende ist in einer Bohrung eines zweiten Schwenkzapfens 78 aufgenommen, der mit dem äußeren Ende des Steuergestänges 42 schwenkbar verbunden ist. Der Handschalthebel 68 läßt sich in einer Schaltkulisse 82 mit einer Schlitzführung von einer Neutralstellung N in eine Stellung F für maximale Vorwärtsfahrt und in eine Stellung R für Rückwärtsfahrt verstellen. Um eine unbeabsichtigte Verstellung des Handschalthebels 68 zu vermeiden und einen entsprechenden Reibungswiderstand zu erzeugen, ist eine Feder 84 auf der Gewindestange 72 angeordnet, die zwischen dem Rahmenteil 14 und einer Unterlagescheibe 86 wirkt, die gegen eine Mutter 88 auf der Gewindestange 72 anliegt. Die Feder 84 drückt die Gewindestange 72 nach rechts, so daß eine Reibscheibe 90, die zwischen der Lasche 73 und dem linken Ende der Buchse 70 vorgesehen ist, gegen das linke Ende der Buchse 70 wirkt und dabei diese Buchse gegen eine zweite Reibscheibe 92 drückt.

Wie aus Fig. 3 hervorgeht, liegt das eine Ende des Steuergestänges 42 gegen den als Anschlagvorrichtung ausgebildeten Schraubenbolzen 62 (F-Stellung) und mit dem linken Ende gegen ein Schlitzende 94 (R-Stellung) des linken Schenkels 54 an, und zwar je nachdem welche Stellung das Steuergestänge 42 gemäß Fig. 3 eingenommen hat. Das Schlitzende 94 bildet dabei eine feste Anlage, während der Schraubenbolzen 62 eine einstellbare Anlage bildet. Der Schraubenbolzen 62 sowie das als Anlageteil ausgebildete Schlitzende 94 weisen in etwa einen gleichen Abstand zur vertikal verlaufenden Schwenkachse des Steuergestänges 42 auf. Das Schlitzende 94 sowie der Schraubenbolzen 62 unterstützen eine Verstellung des Steuergestänges 42 in eine Neutralstellung, und zwar immer dann, wenn das Bremspedal 18 von seiner Stellung gemäß Fig. 2 (Bremslösungsstelle) in eine Bremsstellung verschwenkt wird.

Befindet sich das Steuergestänge 42 in seiner gewünschten Stellung für Vorwärtsfahrt F (gemäß Fig. 3, gestrichelte Linie), so wird dann, durch Betätigung des Bremspedals 18 in eine Bremsstellung, die Gabel 52 nach vorne verschoben, so daß der Schraubenbolzen 62 gegen das äußere Ende des Steuergestänges 42 zur Anlage kommt, wobei durch weitere Verstellung des Bremspedales 18 das Steuergestänge 42 um seine vertikal verlaufende Achse im entgegensetzten Uhrzeigerdrehsinn gemäß Fig. 3 verschwenkt wird. Das Steuergestänge 42 kann so lange verschwenkt werden, bis das andere Ende des Steuergestänges gegen das Schlitzende 94 zur Anlage kommt. Hat das Steuergestänge 42 seine Neutralstellung N erreicht, so befindet sich das Bremspedal 18 in einer Stellung, in der die Bremse voll zum Einsatz kommt. Sollte es notwendig sein, das Bremspedal 18 ein wenig über diesen Bereich hinaus zu verstellen, beispielsweise um eine Parkverriegelung (nicht dargestellt) zu betätigen, so wird diese Bewegung auf das Steuergestänge 42 an zwei Stellen, die einen gleichen Abstand zur Schwenkachse aufweisen, übertragen, so daß das Steuergestänge 42 keine weitere Schwenkbewegung ausführt. Eine derartige Verstellung des Bremspedals 18 ist durch die federelastische Ausbildung des Gestänges 44 der Neutral-Einstellvorrichtung 40 möglich. Durch die beiden Längsschlitze 34, die eine Spielverbindung zwischen dem Bremsgestänge 26 und dem Hebelarm 22 darstellt, ist es möglich, das Bremspedal 18 in seine Zwischenstellung zu verschwenken, bevor die Bremse in irgendeiner Weise beeinflußt wird. Somit wird über das Bremspedal 18 das hydrostatische Getriebe in eine Neutralstellung verstellt, bevor eine Bremswirkung erzielt wird. Der Druckaufbau im hydrostatischen Getriebe bei Beginn des Bremsens bewirkt eine Stellkraft auf die entsprechende Taumelscheibe des hydrostatischen Getriebes, die dann in die Richtung verstellt wird, durch die eine Neutralstellung des Getriebes bewirkt wird. Durch die Verschwenkung des Steuergestänges 42 in seine Neutralstellung wird auch der Handschalthebel 68 aus seiner Stellung für Vorwärtsfahrt F in seine Neutralstellung verstellt. Der Handschalthebel 68 befindet sich also in seiner Neutralstellung, wenn das Bremspedal 18 in seine endgültige Bremsstellung verstellt wird. Wird also das Steuergestänge 42 in seine Neutralstellung verschwenkt, so zieht es das Gestänge 76 nach vorne, so daß die Buchse 70 im entgegengesetzten Uhrzeigerdrehsinn mittels des Hebels 74 gedreht wird. Schwenkt also die Buchse 70 im entgegengesetzten Uhrzeigerdrehsinn, so wird der Handschalthebel 68 nach hinten bewegt, und zwar aus seiner Stellung für Vorwärtsfahrt F in seine Neutralstellung N.

Eine Verstellung des Steuergestänges 42 aus seiner Stellung für Rückwärtsfahrt R in seine Neutralstellung N während des Bremsvorganges wird auf ähnliche Weise wie bei den bereits beschriebenen Schaltvorgängen durchgeführt, jedoch mit der Ausnahme, daß in diesem Fall das Schlitzende 94 zuerst gegen das Steuergestänge 42 zur Anlage kommt und es verschwenkt, bis es gegen den Schraubenbolzen 62 der Anschlagvorrichtung zur Anlage kommt.

Durch die Verstellmöglichkeit des Schraubenbolzens 62 der Anschlagvorrichtung kann sichergestellt werden, daß das Steuergestänge 42 in einem Augenblick seine Neutralstellung erreicht, in dem die Bremse gerade zur Wirkung kommt, wobei durch die Einstellmöglichkeit des Gestänges 76 in den Schwenkzapfen 78 und 80 gewährleistet wird, daß der Handschalthebel 68 gleichzeitig mit dem Steuergestänge 42 seine entsprechende Neutralstellung erreicht. Durch die vorteilhafte Plazierung des Schraubenbolzens 62 der Anschlagvorrichtung und des Gestänges 76, die dicht nebeneinander liegen, können diese auf einfache Weise von einer Stelle her entsprechend verstellt bzw. eingestellt werden.

**Patentansprüche**

1. Schaltvorrichtung für ein Getriebe, insbesondere für ein hydrostatisches Getriebe mit einem ersten Schalthebel (18) zur Betätigung einer Bremse und mit einer Neutral-Einstellvorrichtung (40, 42), die bei Betätigung des ersten Schalthebels (18) einen zweiten Schalthebel (68) in eine Neutralstellung verstellt, der mit einem Steuergestänge zur Schaltung des Getriebes verbunden ist, wobei die Bewegungsrichtung der Neutral-Einstellvorrichtung (40) quer zur Längsseite des Steuergestänges (42) verläuft und die Neutral-Einstellvorrichtung (40) beiderseits einer Schwenkachse des Steuergestänges (42) ein erstes und ein zweites in die Bewegungsrichtung der Neutral-Einstellvorrichtung (40) verstellbares Anschlagteil (Schraubenbolzen 62, Schlitzende 94) aufweist, wobei die Neutral-Einstellvorrichtung (40) zwischen einer ersten Stellung, in der das Steuergestänge (42) zwischen Fahrtstellung (F) und Rückwärtsfahrtstellung (R) frei verschwenkbar ist, und einer zweiten Stellung verstellbar ist, in der das Steuergestänge in eine Neutralstellung gebracht bzw. in dieser gehalten wird und in der beide Anschlagteile gegen das Steuergestänge anliegen können, wobei die Neutral-Einstellvorrichtung (40) einenends an ein Bremspedal (18) angeschlossen ist, dadurch gekennzeichnet, daß die Neutral-Einstellvorrichtung (40) anderenends eine Gabel (52) mit zwei in die Bewegungsrichtung der Neutral-Einstellvorrichtung verlaufenden Schenkeln (54) aufweist, die beiderseits der Schwenkachse des Steuergestänges (42) vorgesehen sind und zur Aufnahme des Steuergestänges gegenüberliegende Längsschlitze (58) aufweisen, wobei zumindest ein Anschlagteil durch das Schlitzende (94) gebildet ist.

2. Vorrichtung nach Anspruch 1, dadurch gekennzeichnet, daß der zweite Schalthebel als Handschalthebel (68) ausgebildet ist, der mit einer auf einer Gewindestange (72) drehbar gelagerten Buchse (70) verbunden ist, die über einen Hebel (74) und ein Gestänge (76) an das eine Ende des schwenkbar gelagerten Steuergestänges (42) angeschlossen ist, wobei der Abstand zwischen dem Hebel (74) und dem Steuergestänge (42) über das Gestänge (76) einstellbar ist.

3. Vorrichtung nach Anspruch 1, dadurch gekennzeichnet, daß zumindest der eine Schenkel (54) der Gabel (52) einen in der Neutralstellung parallel zur Längsseite des Steuergestänges (42) verlaufenden Steg zur Aufnahme eines als Anschlagteil ausgebildeten, einstellbaren Schraubenbolzens (62) aufweist.

4. Vorrichtung nach einem oder mehreren der vorhergehenden Ansprüche, dadurch gekennzeichnet, daß die Neutral-Einstellvorrichtung (40) aus einem Gestänge (44) mit der daran angeordneten Gabel (52) gebildet ist und parallel zu einem über eine Spielverbindung an das Bremspedal (18) angeschlossenen Bremsgestänge (26) verläuft, wobei das Getriebe über das Bremspedal (18) und das Gestänge (44) in eine Neutralstellung (N) verstellbar ist, bevor das Bremsgestänge (26) verstellbar ist.

5. Vorrichtung nach einem oder mehreren der vorhergehenden Ansprüche, dadurch gekennzeichnet, daß das den Hebel (74) mit dem Steuergestänge (42) verbindende Gestänge (76) endseitig in je einem am Hebel (74) und am Steuergestänge (42) angeordneten Zapfen verschiebbar und über je einem Schraubenbolzen feststellbar aufgenommen ist.

6. Vorrichtung nach einem oder mehreren der vorhergehenden Ansprüche, dadurch gekennzeichnet, daß die an das Steuergestänge (42) mittel- oder unmittelbar angeschlossene Buchse (70) über eine Feder (84) gegen mindestens eine Reibscheibe (90) anpreßbar ist.

7. Vorrichtung nach einem oder mehreren der vorhergehenden Ansprüche, dadurch gekennzeichnet, daß die Neutral-Einstellvorrichtung (40) parallel zum Bremsgestänge (26) und parallel zur Längsmittelebene des Handschalthebels (68) verläuft.

8. Vorrichtung nach einem oder mehreren der vorhergehenden Ansprüche, dadurch gekennzeichnet, daß das Bremsgestänge (26) einenends in einer Gabel (28) verschiebbar aufgenommen ist und eine Feder aufweist, die einenends gegen einen Sicherungsring (32) des Bremsgestänges und anderenends gegen einen Steg der Gabel anliegt.

**Claims**

1. Shift mechanism for a transmission, in particular a hydrostatic transmission with a first control lever (18) for actuating a brake and with a neutral setting device (40, 42) which, on actuation of the first control lever (18), shifts into a neutral position a second control lever (68) connected to a control linkage for shifting the transmission, the direction of movement of the neutral setting device (40) extending transversely of the longitudinal side of the control linkage (42) and the neutral setting device (40) having on both sides of a pivot pin of the control linkage (42) a first and a second abutment element (screw bolt 62, slotted end 94) adjustable in the direction of movement of the neutral setting device (40), the neutral setting device (40) being adjustable between a first position, in which the control linkage (42) is freely swingable between the forward motion position (F) and the reverse motion position (R), and a second position in which the control linkage is brought into a neutral position and held therein and in which both abutment elements can bear against the control linkage, the neutral setting device (40) being connected at one end to a brake pedal (18), characterised in that the neutral setting device (40) has at the other end a fork (52) with two arms (54) extending in the direction of movement of the neutral setting device and which are provided on both sides of the pivot pin of the control linkage (42) and have opposed longitudinal slots (58) for receiving the control linkage, at least one abutment element being formed by the slotted end (94).

2. Mechanism according to claim 1, characterised in that the second control lever is in the form of a manual control lever (68) connected to a sleeve (70) rotatably mounted on a threaded rod (72) and which is connected via a lever (74) and a linkage (76) to one end of the swingably mounted control linkage (42), the distance between the lever (74) and the control linkage (42) being adjustable by means of the linkage (76).

3. Mechanism according to claim 1, characterised in that at least one arm (54) of the fork (52) has a transverse portion extending parallel to the longitudinal side of the control linkage (42) in the neutral position for receiving an adjustable screw bolt (62) designed as an abutment element.

4. Mechanism according to one or more of the preceding claims, characterised in that the neutral setting device (40) is formed by a linkage (44) with the fork (52) arranged thereon and extends parallel to a brake linkage (26) connected to the brake pedal (18) via a free-motion connection, the transmission being shiftable into a neutral position (N) by means of the brake pedal (18) and the linkage (44) before the brake linkage (26) can be shifted.

5. Mechanism according to one or more of the preceding claims, characterised in that the linkage (76) connecting the lever (74) to the control linkage (42) is adjustable at the ends in each case in a pivot arranged on the lever (74) and on the control linkage (42) and is accommodated to be fixable in position by means of a screw bolt in each case.

6. Mechanism according to one or more of the preceding claims, characterised in that the sleeve (70) directly or indirectly connected to the control linkage (42) can be pressed by means of a spring (84) against at least one friction disc (90).

7. Mechanism according to one or more of the preceding claims, characterised in that the neutral setting device (40) extends parallel to the brake linkage (26) and parallel to the central longitudinal plane of the manual control lever (68).

8. Mechanism according to one or more of the preceding claims, characterised in that the brake linkage (26) is slidably received at one end in a fork (28) and has a spring bearing at one end against a securing ring (32) for the brake linkage and at the other end against a cross-piece of the fork.

## Revendications

1. Dispositif de commande pour mécanisme de changement de vitesse, en particulier pour un mécanisme de changement de vitesse hydrostatique comportant un premier levier de commande (18) pour l'actionnement d'un frein et un dispositif de réglage du point mort (40, 42) qui, lors de l'actionnement du premier levier de commande (18), déplace un second levier de commande (68) en l'amenant dans une position de point mort, ce second levier étant relié à une tringlerie de commande pour la commande du mécanisme de changement de vitesse, la direction de déplacement du dispositif de réglage du point mort (40) étant transversale par rapport au côté longitudinal de la tringlerie de commande (42) et le dispositif de réglage du point mort (40) comportant, de part et d'autre d'un axe de pivotement de la tringlerie de commande (42), un premier élément formant butée et un second élément formant butée pouvant être déplacé dans la direction de déplacement du dispositif de réglage du point mort (40) (boulon 62, extrémité de fente 94), le dispositif de réglage du point mort (40) étant déplaçable entre une première position dans laquelle la tringlerie de commande (42) peut pivoter librement entre une position de marche avant (F) et une position de marche arrière (R), et une seconde position dans laquelle la tringlerie de commande est amenée dans une position de point mort ou maintenue dans cette position et dans laquelle les deux éléments formant butées peuvent s'appuyer contre la tringlerie de commande, le dispositif de réglage du point mort (40) étant raccordé à une extrémité à une pédale de frein (18), caractérisé en ce que le dispositif de réglage du point mort (40) comporte, à l'autre extrémité, une chape (52) comportant deux branches (54) dirigées dans le sens de déplacement du dispositif de réglage du point mort, qui sont prévues de part et d'autre de l'axe de pivotement de la tringlerie de commande (42) et comportent, pour recevoir la tringlerie de commande, des fentes longitudinales opposées (58), un élément formant butée au moins étant constitué par l'extrémité de fente (94).

2. Dispositif suivant la revendication 1, caractérisé en ce que le second levier de commande est réalisé sous la forme d'un levier de commande manuelle (68) qui est relié à une douille (70) placée de façon à pouvoir tourner sur une tige filetée (72), qui est raccordée par un levier (74) et une tringlerie (76) à l'une des extrémités de la tringlerie de commande (42) montée de façon à pouvoir pivoter, la distance entre le levier (74) et la tringlerie de commande (42) pouvant être réglées au moyen de la tringlerie (76).

3. Dispositif suivant la revendication 1, caractérisé en ce que l'une au moins des branches (54) de la chape (52) comporte une partie s'étendant parallèlement au côté longitudinal de la tringlerie de commande (42), dans la position de point mort, pour recevoir un boulon réglable (62) conformé en élément formant butée.

4. Dispositif selon une ou plusieurs des revendications précédentes, caractérisé en ce que le dispositif de réglage du point mort (40) est constitué par une tringlerie (44) sur laquelle est placée une chape (52) et est dirigée parallèlement à une tringlerie de frein (26) raccordée à la pédale de frein (18) par des organes ménageant une course à vide (liaison à jeu), le mécanisme de changement de vitesse pouvant être amené dans une position de point mort (N) avant que la tringlerie de frein (26) ne puisse être déplacée, au moyen de la pédale de frein (18) et de la tringlerie (44). -

5. Dispositif selon une ou plusieurs des revendications précédentes, caractérisé en ce que la tringlerie (76) reliant le levier (74) à la tringlerie de commande (42) peut être déplacée par ses extrémités dans un tourillon placé respectivement sur le levier (74) et sur la tringlerie de commande (42) et est montée de manière à pouvoir être immobilisée au moyen d'un boulon respectif.

6. Dispositif suivant une ou plusieurs des revendications précédentes, caractérisé en ce que la douille (70) raccordée indirectement ou directement à la tringlerie de commande (42) peut être appliquée au moyen d'un ressort (84) contre au moins un disque de friction (90).

7. Dispositif suivant une ou plusieurs des revendications précédentes, caractérisé en ce que le dispositif de réglage du point mort (40) est dirigé parallèlement à la tringlerie de frein (26) et parallèlement au plan de symétrie longitudinal du levier de commande manuelle (68).

8. Dispositif suivant une ou plusieurs des revendications précédentes, caractérisé en ce que la tringlerie de frein (26) est montée par l'une de ses extrémités de façon à pouvoir se déplacer dans une chape (28) et comporte un ressort qui s'appuie par une extrémité contre un circlip (ou bague d'arrêt) (32) de la tringlerie de frein et, par son autre extrémité, contre un dos (ou branche transversale) de la chape.

FIG. 1

BRAKE CONTROL
LEVER

FIG. 3

TRANSMISSION
CONTROL LEVER

FIG. 2